# EUROPÄISCHE PATENTSCHRIFT

(11) **EP 3 296 255 B1**
(45) Veröffentlichungstag und Bekanntmachung des Hinweises auf die Patenterteilung: **04.11.2026**
(21) Anmeldenummer: 16400041.6
(22) Anmeldetag: 14.09.2016
(51) Int. Cl.: C01B 3/38, B01J 19/32, B01J 8/02

(54) **REFORMERROHR MIT STRUKTURIERTEM KATALYSATOR UND VERBESSERTEM WÄRMEHAUSHALT**
REFORMER TUBE WITH STRUCTURED CATALYST AND IMPROVED TEMPERATURE CONTROL
TUBE DE REFORMAGE COMPRENANT UN CATALYSEUR STRUCTURÉ ET GESTION THERMIQUE AMÉLIORÉE

(43) Veröffentlichungstag der Anmeldung: 21.03.2018
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Ulber, Dieter, D-61449 Steinbach (DE); Gary, Daniel, F-78180 Montigny Bretonneux (FR); Prost, Laurent, F-91190 Gif-sur-Yvette (FR); Tadiello, Jean-Philippe, D- 60431 Frankfurt am Main (DE); Basin, Marie, F-78000 Versailles (FR)
(74) Vertreter: Air Liquide

(56) Entgegenhaltungen:
- EP-A1- 0 025 308
- EP-A1- 1 944 269
- WO-A1-00/27518
- WO-A1-01/12310
- WO-A1-2015/132555
- US-A1- 2012 195 801
- US-B1- 6 402 988

## Beschreibung

### Gebiet der Erfindung

Die Erfindung betrifft einen Reformerofen mit einer Vielzahl von Reformerrohren zur Umwandlung kohlenwasserstoffhaltiger Einsatzstoffe, vorzugsweise Erdgas und leichte flüssige Kohlenwasserstoffe wie Naphtha, in ein Kohlenoxide und Wasserstoff enthaltendes Synthesegasprodukt. Das Reformerrohr ermöglicht einen internen Wärmeaustausch zwischen dem Einsatzgas und dem zu Synthesegasprodukten teilumgesetzten Produktgas, wodurch sich Vorteile hinsichtlich des Energieverbrauchs bei der Herstellung von Synthesegas und der Wertprodukte Wasserstoff und Kohlenmonoxid ergeben. Durch die Verwendung eines strukturierten Reformierungskatalysators wird ferner der Druckverlust reduziert.

Teil der Offenbarung ist ferner ein Verfahren zur Herstellung von Synthesegas durch Dampfreformierung kohlenwasserstoffhaltiger Einsatzstoffe unter Verwendung des Reformerrohres.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend.

Die Dampfreformierung von Erdgas verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Außenwände des Reformerofens sowie seine Decke und sein Boden sind dabei mit mehreren Schichten aus feuerfestem Material ausgekleidet oder zugestellt, das Temperaturen bis zu 1200 °C standhält. Die Reformerrohre werden zumeist mittels Brennern befeuert, die an der Oberseite oder Unterseite oder an den Seitenwänden des Reformerofens angebracht sind und direkt den Zwischenraum zwischen den Reformerrohren befeuern. Dabei erfolgt der Wärmeübergang auf die Reformerrohre durch Wärmestrahlung und konvektive Wärmeübertragung von den heißen Rauchgasen.

Nach Vorerhitzung durch Wärmetauscher oder befeuerte Heizer auf ca. 500 °C tritt das Kohlenwasserstoff-Dampf-Gemisch nach Enderhitzung auf ca. 500 bis 800 °C in die Reformerrohre ein und wird dort am Reformierungskatalysator zu Kohlenmonoxid und Wasserstoff umgesetzt. Verbreitet sind Reformierungskatalysatoren auf Nickelbasis. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf. Zur Energieoptimierung oder bei Einsatzstoffen mit höheren Kohlenwasserstoffen kann nach dem Vorerhitzer ein sogenannter Prereformer zur Vorspaltung des Einsatzstoffes eingesetzt werden. Der vorgespaltene Einsatzstoff wird dann in einem weiteren Erhitzer auf die gewünschte Reformerrohreintrittstemperatur erhitzt.

Das heiße Synthesegas-Produktgas wird nach Verlassen des Reformerofens in einem oder mehreren Wärmetauschern teilabgekühlt. Das teilabgekühlte Synthesegas-Produktgas durchläuft anschließend noch weitere Konditionierungsschritte, die von der Art des gewünschten Produktes oder des nachgeschalteten Verfahrens anhängig sind.

Die Dampfreformierung von Erdgas zeichnet sich durch ihren hohen Energiebedarf aus. Im Stand der Technik finden sich daher bereits Vorschläge, bei denen durch optimierte Verfahrensgestaltung, beispielsweise durch Energierückgewinnung, versucht werden soll, den Bedarf an Fremdenergie zu minimieren. So wurde von Higman bei der EURO-GAS-90-Konferenz, Trondheim, Juni 1990, veröffentlicht auch unter http://www.higman.de/gasification/papers/eurogas.pdf (Abruf am 27.09.2011), ein sogenanntes HCT-Reformerrohr mit internem Wärmeaustausch vorgestellt. Dieses umfasst ein äußeres, mit Katalysator gefülltes und von außen beheiztes Reformerrohr, bei dem das Katalysatorbett von dem Einsatzgas von oben nach unten durchströmt wird. Im Inneren des Katalysatorbettes befinden sich zwei gewendelte, als Doppelhelix angeordnete Wärmetauscherrohre aus einem geeigneten Material, durch die das teilreformierte Gas nach Verlassen des Katalysatorbettes strömt und dabei einen Teil seiner fühlbaren Wärme an den am Katalysator ablaufenden Dampfreformierungsprozess abgibt. Nachteilig ist hierbei allerdings der höhere Druckverlust aufgrund der längeren Leitungsstrecke des Gases durch die wendelförmig ausgestalteten Wärmetauscherrohre. Ein auf dieser Grundlage weiterentwickeltes Reformerrohr mit internem Wärmeaustausch wird auch in der internationalen Patentanmeldung WO 2013/068416 A1 gelehrt.

Bei der Weiterentwicklung der Dampfreformierungstechnologie besteht neben der Optimierung des Wärmehaushalts des Reformerrohrs eine weitere Zielrichtung in der Minimierung des Druckverlusts, die aufgrund der Reduzierung der benötigten Verdichtungsarbeit wirtschaftliche Vorteile erbringt.

Diese beiden Themengebiete wirken insofern zusammen, da konstruktive Maßnahmen, die auf die Verbesserung des Wärmehaushalts im Reformerrohr abzielen, oftmals den Druckverlust über das Reformerrohr in unerwünschter Weise erhöhen. Soll der Gesamtdruckverlust über das Reformerrohr daher konstant gehalten oder sogar reduziert werden, verbleibt als wesentliche Einflussgröße eine Reduzierung des Druckverlustes über den vorhandenen Reformierungskatalysator.

Eine Möglichkeit zur Reduzierung des Druckverlustes über den Reformierungskatalysator besteht in der Verwendung strukturierter Packungen, die einen Reformierungskatalysator enthalten, wodurch strukturierte Katalysatoren entstehen. Unter einer strukturierten Packung versteht der Fachmann - in Abgrenzung von unstrukturierten Packungen bzw. Partikelschüttungen - speziell entworfene Behältereinbauten, wie sie beispielsweise in Absorberkolonnen, Destillationskolonnen und Festbettreaktoren eingesetzt werden. Eine strukturierte Packung besteht oft aus dünnen, gewellten und gelochten Metallplatten bzw. Drahtnetzen. Ferner können keramische Körper hergestellt werden, die dann als Wabenkörper oder Honeycombs bezeichnet werden. Das Design der strukturierten Packungen soll ihre spezifische Oberfläche maximieren und somit einen optimalen Austausch zwischen den unterschiedlichen Phasen bei minimalem Druckwiderstand oder Druckverlust gewährleisten. Bei einer heterogen katalysierten Reaktion wie der Dampfreformierung soll mithin die Austauschfläche zwischen dem strukturierten Katalysator und der Gasphase maximiert werden. Unter einem strukturiertem Katalysator wird demgemäß eine strukturierte Packung verstanden, die einen Katalysator enthält, indem dieser beispielsweise als Beschichtung auf die Oberfläche der strukturierten Packung aufgebracht oder in Form kleiner Partikel in die Strukturelemente der strukturierten Packung eingebettet wird.

Die Verwendung strukturierter Katalysatoren für die Dampfreformierung von Kohlenwasserstoffen ist an sich bekannt und wird beispielsweise in den Patentveröffentlichungen EP 1 857 174 A1 und EP 1 944 269 A1 beschrieben.

Die US-Patentanmeldung US 2012/0195801 A1 beschreibt den Aufbau strukturierter Katalysatoren im Zusammenhang mit der Dampfreformierung. Gelehrt werden dort stapelbare Packungsmodule oder -segmente, die um einen zentralen Führungsstab herum angeordnet sind. Die Packungssegmente weisen eine Fächer- bzw. Zickzackform auf und werden auf ihrer Unterseite von einem kreisringförmigen Stützelement getragen. Die Packungssegmente sind aus Metallfolien gefertigt und mit einem katalytisch wirkenden Material, beispielsweise dem für die Dampfreformierung aktiven Nickel, beschichtet. Durch die Fächerform werden radial verlaufende Strömungskanäle gebildet und somit die Verweilzeit des Einsatzgases in der strukturierten Packung erhöht. Das Reaktorrohr wird durch Aufeinanderstapeln einzelner Packungssegmente mit diesen ausgefüllt.

Die internationale Patentanmeldung WO 2015/132555 A1 offenbart die Verwendung von strukturierten Katalysatoren neben herkömmlichen Schüttungen partikel- oder pelletförmiger Reformierungskatalysatoren in unterschiedlichen Abschnitten eines Reformerrohrs.

Es wird gelehrt, bei einem aufrecht stehenden, von oben nach unten von Einsatzgas durchströmten Reformerrohr den als Schüttung eingesetzten Reformierungskatalysator in der Nähe des Auslassendes des Reformerrohrs und den strukturierten Reformierungskatalysator in der Nähe des Einlassendes des Reformerrohrs anzuordnen. Auf diese Weise würden aufwendige Stützkonstruktionen vermieden, die bei einem Einsatz strukturierter Katalysatoren in der Nähe des Reaktorausgangs benötigt würden.

Nachteilig bei der Verwendung eines strukturierten Katalysators für die Dampfreformierung von Kohlenwasserstoffen ist der unter Umständen im Vergleich zu einer Schüttung körnigen oder stückigen Katalysators schlechtere Wärmeübergang. So lehrt die europäische Patentanmeldung EP 1 857 174 A1, dass je nach der Geometrie der strukturierten Packung insbesondere der Wärmeübergang zwischen der Innenwand des Reformerrohrs und seinem Zentrum, also der radiale Wärmeübergang, schlechter sein kann als bei einem mit einer Katalysatorschüttung gefüllten Rohrreaktor. Zwar wird der radiale Wärmeübergang durch eine Ausgestaltung der Packungssegmente, wie sie in der US 2012/0195801 A1 beschrieben wird, verbessert; aufgrund der hohen Endothermie der Dampfreformierung von Kohlenwasserstoffen wäre aber ein Reaktor mit weiter verbessertem radialen Wärmeübergang wünschenswert.

US 6,402,988 offenbart ein Reformerrohr für die Umwandlung von Methan. Das Rohr weist eine Reaktionskammer, eine Austrittskammer und eine Sammelleitung auf. Der Eintritt für den Einsatzstoff ist im Bereich eines Trennbodens angeordnet. Innerhalb der Reaktionskammer ist ein Wärmeaustauscherrohr angeordnet. Das Austrittsende des Wärmeaustauscherrohres führt durch den Trennboden in die Austrittskammer. Die Reaktionskammer ist mit einem Katalysator befüllt.

### Beschreibung der Erfindung

Die Aufgabe der vorliegenden Erfindung besteht daher darin, einen Reformerofen mit einer Vielzahl von Reformerrohren anzugeben, welcher die Nachteile des Standes der Technik zumindest teilweise überwindet.

Diese Aufgabe wird durch einen Reformerofen mit einer Vielzahl von Reformerrohren mit den Merkmalen des Anspruchs 1 gelöst. Weitere Ausgestaltungen der Erfindung ergeben sich aus den jeweiligen Unteransprüchen.

Unter Fluidverbindung zwischen zwei Bereichen des Reformerrohres wird dabei jegliche Art von Verbindung verstanden, die es ermöglicht, dass ein Fluid, beispielsweise der Einsatzgasstrom oder der Synthesegasproduktstrom, von dem einen zu dem anderen der beiden Bereiche strömen kann, unbeachtlich etwaiger zwischengeschalteter Bereiche oder Bauteile.

Mit Wärmeaustauschbeziehung ist die Möglichkeit des Wärmeaustauschs oder der Wärmeübertragung zwischen zwei Bereichen des Reformerrohres gemeint, wobei alle Mechanismen des Wärmeaustauschs oder der Wärmeübertragung wie Wärmeleitung, Wärmestrahlung oder konvektiver Wärmetransport zum Tragen kommen können.

Unter Dampfreformierungsbedingungen sind die dem Fachmann an sich bekannten Verfahrensbedingungen, insbesondere von Temperatur, Druck und Verweilzeit, zu verstehen, wie sie oben beispielhaft genannt und detailliert im einschlägigen Schrifttum erörtert werden und bei denen mindestens ein Teilumsatz, bevorzugt allerdings technisch relevante Umsätze der Edukte in Synthesegasprodukte wie CO und Wasserstoff erfolgt. Entsprechend wird unter einem für die Dampfreformierung aktiven Katalysator ein Katalysator verstanden, der unter Dampfreformierungsbedingungen eben solche Umsätze bewirkt.

Die Begriffe "strukturierte Packung" und "strukturierter Katalysator" sind dem Fachmann vertraut und werden im Schrifttum verwendet. Es wird hierzu beispielhaft auf den Aufsatz von M. Grünewald und U. Kunz, "Strukturierte Katalysatoren als Bausteine multifunktionaler Reaktoren", Chemie Ingenieur Technik 2007, 79, No. 9, verwiesen.

Der Erfindung liegt die Erkenntnis zugrunde, dass dem im Vergleich zu einer Katalysatorschüttung schlechteren Wärmeübergang bei der Verwendung eines strukturierten Katalysators für die Dampfreformierung von Kohlenwasserstoffen dadurch entgegengewirkt werden kann, dass im Inneren des strukturierten Katalysators ein Wärmetauscherrohr vorgesehen wird, durch das das erzeugte Synthesegasprodukt zur Austrittskammer strömt und dabei einen Teil seiner fühlbaren Wärme im Gegenstrom an den strukturierten Katalysator und den durch ihn strömenden Einsatzgasstrom und somit an den am Katalysator ablaufenden Dampfreformierungsprozess abgibt. Dies verbessert insbesondere den radialen Wärmetransport im Reformerrohr. Von besonderem Vorteil ist dabei, dass das Wärmetauscherrohr gleichzeitig Stütz- und Tragefunktionen für den strukturierten Katalysator bzw. für die einzelnen Packungssegmente aufweist.

Das Mantelrohr und das Wärmetauscherrohr haben jeweils einen kreisförmigen Querschnitt, wohingegen die strukturierte Packung einen kreisringförmigen Querschnitt aufweist. Dabei sind das Mantelrohr, die strukturierte Packung und das Wärmetauscherrohr koaxial und konzentrisch angeordnet, wobei die strukturierte Packung im Wesentlichen gasdicht abschließend zwischen der Innenwand des Mantelrohrs und der Außenwand des Wärmetauscherrohrs angeordnet ist, so dass Kurzschlussströmungen an der Innenwand des Mantelrohrs entlang und somit an der strukturierten Packung vorbei minimiert werden.

Das Reformerrohr ist stehend angeordnet, wobei die Reaktionskammer im oberen Bereich und die Austrittskammer im unteren Bereich angeordnet ist und die strukturierte Packung von unten nach oben von dem Einsatzgasstrom durchströmt wird. Dies hat den Vorteil, dass sich sowohl der Eintritt für den Einsatzgasstrom als auch die Sammelleitung an der Unterseite der Anlage, unterhalb des Reformerofens, befinden und somit für Montage- und Revisionsarbeiten leicht zugänglich sind. Ferner reduziert sich die Bauhöhe der Anlage gegenüber einer wie beispielsweise in der WO 2015/132555 A1 beschriebenen Anordnung, bei der sich Gaseintritt und Gasaustritt bzw. Sammelleitung auf verschiedenen Seiten des Reformers befinden. Das Durchströmen des Einsatzgasstroms durch das Reformerrohr von unten nach oben wirkt vorteilhaft mit der Tatsache zusammen, dass der Katalysator in strukturierter Form vorliegt, da bei einem als Partikelschüttung vorliegenden Katalysator für diese Strömungsrichtung die Gefahr der unerwünschten Fluidisierung vorliegt. Bei dieser werden Katalysatorpartikel durch die Gasströmung angehoben und können beim Zurückfallen zerbrechen. Hierdurch kommt es zu Katalysatorverlusten sowie, bedingt durch die entstehenden Bruchstücke bzw. Feinanteile, zu einem unerwünschten Anstieg des Druckverlusts über das Reformerrohr.

Bevorzugt bestehen bei dem Reformerrohr sowohl die strukturierte Packung als auch das Wärmetauscherrohr aus einzelnen Modulen oder Segmenten, wobei jedes Wärmetauscherrohrsegment mit einer Stütz- oder Tragevorrichtung für das zugehörige Packungssegment ausgestattet ist. Hierdurch können die einzelnen Packungssegmente und Wärmetauscherrohrsegmente leichter vor Einbau in das Reformerrohr gefertigt werden. Verschiedene Packungshöhen können in einfacher Weise dadurch erzielt werden, dass eine unterschiedliche Anzahl von Lagen von Packungssegmenten, getragen durch entsprechende Wärmetauscherrohrsegmente, aufeinander gestapelt wird. Als Stütz- oder Tragevorrichtung kommen je nach Gewicht der Packungssegmente beispielsweise Lochbleche oder Drahtnetze in Betracht, die gegebenenfalls zusätzlich von radial von dem Wärmetauscherrohrsegment ausgehenden Stützstreben nach unten hin abgestützt werden können. Werden die Stütz- oder Tragevorrichtungen und die Stützstreben aus einem Metall oder einem anderen Material mit guter Wärmeleitfähigkeit gefertigt, wird zudem der radiale Wärmeübergang im Reformerrohr unterstützt.

In besonderer Ausgestaltung des Reformerrohrs umfasst die Reaktionskammer mindestens einen Bereich, der eine Schüttung eines für die Dampfreformierung aktiven, körnigen, festen Katalysators enthält. Entsprechende Reformierungskatalysatoren, die beispielsweise Nickel und/oder ein Edelmetall enthalten, hält der Handel bereit. Die Verwendung einer Katalysatorschüttung in einem Teilbereich der Reaktionskammer des Reformerrohrs erbringt Kostenvorteile, da partikel- oder pelletförmige Reformierungskatalysatoren kostengünstiger herzustellen sind als strukturierte Katalysatoren. Wird ein solcher eine Katalysatorschüttung enthaltender Bereich dem strukturierten Katalysator vorgeschaltet, ergeben sich weitere Vorteile, da dieser Bereich gleichzeitig als Mischungszone für den Einsatzgasstroms wirkt. Dem nachfolgend stromabwärts angeordneten strukturierten Katalysator wird somit ein insbesondere in Radialrichtung besser durchmischtes Einsatzgasgemisch aufgegeben. Die Stütz- oder Tragevorrichtung des ersten der Katalysatorschüttung nachgeschalteten Packungssegments verhindert gleichzeitig die Fluidisierung der Katalysatorschüttung. Allerdings kann auch die Anordnung eines eine Katalysatorschüttung enthaltenden Bereichs stromabwärts von dem strukturierten Katalysator vorteilhaft sein. Es könnte hier beispielsweise ein aktiverer, Edelmetalle enthaltender Katalysator eingesetzt werden, der den Gesamtumsatz des Einsatzgasgemischs zu Synthesegasprodukten erhöht.

Ein Freiraum in der Reaktionskammer, der den die Katalysatorschüttung enthaltenden Bereich aufnehmen kann, kann bevorzugt dadurch gebildet werden, dass das entsprechende Packungssegment weggelassen wird, das zugehörige Wärmetauscherrohrsegment aber vorhanden ist. Die an der Ober- und Unterseite dieses Bereichs vorhandenen Stütz- oder Tragevorrichtungen des weggelassenen bzw. des nachfolgenden Packungssegments können dann als Rückhaltevorrichtungen für die Katalysatorschüttung dienen. Wenn der die Katalysatorschüttung enthaltende Bereich eingangsseitig, also dem strukturierten Katalysator vorgeschaltet angeordnet werden soll. ist ggf. eine zusätzliche Rückhaltevorrichtung, beispielsweise ein Lochblech, für diese Katalysatorschüttung vorzusehen.

Eine vorteilhafte Ausgestaltung des Reformerrohres sieht vor, dass das Wärmetauscherrohr mindestens teilweise mit einer Inertkörperschüttung gefüllt oder auf seiner Innenseite mit Leitblechen ausgestattet ist. Je nach Innendurchmesser des Wärmetauscherrohrs kann auf diese Weise der Wärmeübergang von dem Synthesegasproduktstrom auf die Rohrinnenwand und der Wärmedurchgang durch diese Wand wirkungsvoll erhöht werden. Je nach Druckverlustanforderungen können entweder eine Inertkörperschüttung (höherer Druckverlust) bzw. Leitbleche (geringerer Druckverlust) verwendet werden.

Im Zusammenhang mit der Ausgestaltung und Materialauswahl für das Reformerrohr und seine Bestandteile sind zu berücksichtigen, dass sich insbesondere bei Reformerrohren mit internem Wärmeaustausch eine als "Metal Dusting" bezeichnete Korrosion stärker bemerkbar machen kann, da unter Umständen längere Abschnitte der Wärmetauscherrohre dem für die Metal-Dusting-Korrosion relevanten Temperaturbereich ausgesetzt sind.

Wie in dem Fachaufsatz " Metal Dusting Protective Coatings. A Literature Review", A. Agüero et al., Oxid Met (2011) 76:23-42, gelehrt wird, ist Metal Dusting eine Art korrosiver Desintegration von Metallen und Legierungen in feine Partikel. Materialien, die anfällig für diese Form des Korrosionsangriffs sind, sind insbesondere Eisen, Nickel, Cobalt und ihre Legierungen. Metal Dusting tritt bei hohen Temperaturen von etwa 400 bis 800 °C und in Gasatmosphären auf, die insbesondere Kohlenmonoxid (CO) oder Kohlenwasserstoffe enthalten. Bei hohen Temperaturen neigen CO und Kohlenwasserstoffe dazu, auf Metall zu dissoziieren und hierdurch Kohlenstoff auf der Metalloberfläche abzulagern. Der Kohlenstoff wird dann an die feste Phase überführt und extrahiert die anfälligen Metalle aus ihrer homogenen festen Matrix, wodurch es zu Lochfraß und schließlich zum mechanischen Zusammenbruch der Materialien kommt. Dies führt zu hohen Wartungskosten und kann ernsthafte Sicherheitsprobleme verursachen, beispielsweise durch Bersten drucktragender Leitungen und Apparate und/oder den Austritt giftigen Kohlenmonoxids.

Die Metal-Dusting-Korrosion wird häufig in Dampfreformierungsverfahren beobachtet, wobei alle Anlagenteile, insbesondere Ausrüstungsteile der Abhitzestrecke betroffen sind, die mit dem erzeugten Synthesegas im genannten Temperaturbereich in Berührung kommen.

Das Auftreten von Metal Dusting kann beispielsweise durch das Anbringen einer korrosionshemmenden Beschichtung auf der Legierungsoberfläche verhindert oder zumindest verlangsamt werden. Dabei kommen häufig Diffusionsbeschichtungen zum Einsatz, die gebildet werden, wenn eine Legierung mit einem Metall oder einer Metallmischung bei einer Temperatur beschichtet wird, die hoch genug ist, um eine Eindiffusion des oder der Metalle in das Substrat zu ermöglichen. Daraus ergibt sich eine metallurgische Bindung mit dem Substratmaterial und die Beschichtung wird dann zu einem integralen Bestandteil des Substratmaterials. Auch eine Fertigung kompletter Anlagenteile, beispielsweise von Rohrleitungen, aus keramischen Werkstoffen bietet Schutz vor der Metal-Dusting-Korrosion.

Eine bevorzugte Ausgestaltung des Reformerrohrs wird demgemäß dadurch erhalten, dass das Austrittsende des Wärmetauscherrohrs auf seiner Innenseite und der durch den Trennboden durchgeführte Anteil auch auf seiner Außenseite mit einer Korrosionsschutzschicht ausgestattet ist. Diese kann beispielsweise durch eine Aluminium-Diffusionsschicht gebildet werden. Zusätzlich oder alternativ sollte ein korrosionsresistentes Material für das Wärmetauscherrohr verwendet werden, beispielsweise eine Nickelbasislegierung.

In Weiterbildung der Erfindung ist auch die Austrittskammer korrosionsbeständig gegen die Metal-Dusting-Korrosion auszuführen. Dies kann so erfolgen, dass das durch den Trennboden durchgeführte Austrittsende des Wärmetauscherrohrs in ein im Inneren des Mantelrohrs angeordnetes Innenrohr einmündet, das in Fluidverbindung mit der Sammelleitung steht, so dass das Synthesegasprodukt von der Reaktionskammer über die Austrittskammer in die Sammelleitung gelangen kann, wobei das Innenrohr mit einer Korrosionsschutzschicht ausgestattet ist oder aus einem korrosionsbeständigen, z. B. einem keramischen Material besteht. Dabei ist es nicht erforderlich, dass das Rohrende des Wärmetauscherrohrs in das Innenrohr eingeführt werden muss. Vielmehr können Wärmetauscherrohr und Innenrohr auch leicht beabstandet angeordnet werden. Wesentlich ist es, dass die aus dem Wärmetauscherrohr austretende Gasströmung im Wesentlichen vollständig in das Innenrohr einströmt und somit in dieses einmündet.

Der erfindungsgemäße Reformerofen umfasst feuerfest ausgekleidete oder feuerfest zugestellte Wände, eine Decke und einen Boden und einen dadurch gebildeten Innenraum, der dadurch gekennzeichnet ist , dass eine Vielzahl von Reformerrohren und eine Vielzahl von Brennern zur Beheizung der Reformerrohre in dem Innenraum angeordnet sind.

In bevorzugter Ausgestaltung ist in dem erfindungsgemäßen Reformerofen mindestens ein Reformerrohr stehend in dem Innenraum angeordnet, wobei der die Reaktionskammer umfassende Teil des Reformerrohrs mindestens teilweise im Innenraum angeordnet ist und der die Austrittskammer umfassende Teil des Reformerrohrs mindestens teilweise außerhalb des Innenraums angeordnet ist. Dies hat den Vorteil, dass sich sowohl der Eintritt für den Einsatzgasstrom als auch die Sammelleitung an der Unterseite der Anlage, unterhalb des Reformerofens, befinden und somit für Montage- und Revisionsarbeiten leicht zugänglich sind. Ferner reduziert sich die Bauhöhe der Anlage gegenüber einer wie beispielsweise in der WO 2015/132555 A1 beschriebenen Anordnung, bei der sich Gaseintritt und Gasaustritt bzw. Sammelleitung auf verschiedenen Seiten des Reformers befinden.

In weiterer bevorzugter Ausgestaltung des erfindungsgemäßen Reformerofens ist auch der Eintritt für den den Einsatzstoff enthaltenden Einsatzgasstrom außerhalb des Innenraums angeordnet. Von Vorteil ist hierbei, dass der Eintritt aus einem weniger hitzebeständigen Material ausgeführt werden kann und für Revisionen leichter zugänglich ist.

In besonderer Ausgestaltung des erfindungsgemäßen Reformerofens ist das mindestens eine Reformerrohr frei hängend oder frei stehend in dem Innenraum angeordnet, wobei der die Reaktionskammer umfassende Teil des Mantelrohrs im Innenraum angeordnet ist und der die Austrittskammer umfassende Teil des Mantelrohrs mindestens teilweise durch die Decke oder den Boden durchgeführt wird. Frei hängend oder frei stehend bedeutet in diesem Zusammenhang, dass nur das die Austrittskammer umfassende Ende des Reformerrohrs in mechanischem Kontakt mit der Decke oder dem Boden des Reformerofens steht.

Dies ist besonders günstig, da auf diese Weise thermisch-mechanische Spannungen zwischen dem Eintritt für den Einsatzgasstrom und dem Austritt für den Synthesegasproduktstrom vermieden werden, die aufgrund der beträchtlichen Temperaturunterschiede bei den aus dem Stand der Technik bekannten Reformerrohren entstehen, bei denen jeweils das Eintrittsende und das Austrittsende aus dem Reformerofen herausragen. Bei letzteren werden daher aufwändige Maßnahmen, wie beispielsweise die Verwendung von Gegengewichtsystemen, Spannungskompensatoren (sog. Pigtails) oder von Seilzügen, eingesetzt, um die auftretenden Spannungen und deren negative Auswirkungen, beispielsweise eine Verformung des Reformerrohrs, zu kompensieren. Dies ist bei der frei hängenden oder frei stehenden Anordnung des Reformerrohrs nicht mehr notwendig.

Als Alternative für die zuletzt erörterte Ausgestaltung des erfindungsgemäßen Reformerofens kann auch eine stehende oder hängende Anordnung des mindestens einen Reformerrohrs in dem Innenraum in Betracht kommen, in der die Verschlussvorrichtung oder der ihr benachbarte Teil des Mantelrohrs mit einem Gegengewichtsystem verbunden ist, um Deformierungen des Reformerrohrs zu verhindern, die sich durch seine thermische Längenausdehnung ergeben können.

In dem erfindungsgemäßen Reformerofens sind eine Vielzahl von Reformerrohren und Brennern so in dem Innenraum angeordnet, dass die Längsachsen der durch die Brenner erzeugten Flammen parallel zu den Längsachsen der Reformerrohre ausgerichtet sind. Auf diese Weise kann sichergestellt werden, dass durch einen Brenner die um ihn angeordneten Reformerrohre gleichmäßig beheizt werden. Ferner wird den Reformerrohren durch die parallel verlaufenden Flammenachsen auf einer längeren Strecke Strahlungswärme zugeführt und eine lokale Überhitzung der Außenseiten der Reformerrohre vermieden.

Teil der Offenbarung ist auch ein Verfahren zur Herstellung von Synthesegas durch katalytisches Dampfreformieren kohlenwasserstoffhaltiger Einsatzstoffe, bevorzugt Erdgas, unter Dampfreformierungsbedingungen in Gegenwart eines für die Dampfreformierung aktiven, festen Katalysators, umfassend folgende Schritte:
(a) Bereitstellen eines den Einsatzstoff enthaltenden Einsatzgasstroms und Zugabe von Reformierungsdampf,
(b) Katalytisches Umsetzen des Einsatzstoffes unter Dampfreformierungsbedingungen zu einem Kohlenoxide und Wasserstoff enthaltenden Synthesegasprodukt,
(c) Ausleiten und optional Aufarbeiten des Synthesegasprodukts,
dadurch gekennzeichnet, dass das katalytische Umsetzen in Schritt (b) in einem erfindungsgemäßen Reformerrohr nach einer der erörterten Ausgestaltungen erfolgt.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: ein Reformerrohr gemäß einer ersten Ausführungsform,
- Fig. 2: ein Reformerrohr gemäß einer zweiten Ausführungsform,
- Fig. 3: ein Reformerrohr gemäß einer dritten Ausführungsform,
- Fig. 4: den Aufbau eines Packungssegments,
- Fig. 5: den Aufbau des strukturierten Katalysators durch Aufeinanderstapeln einzelner Packungssegmente.

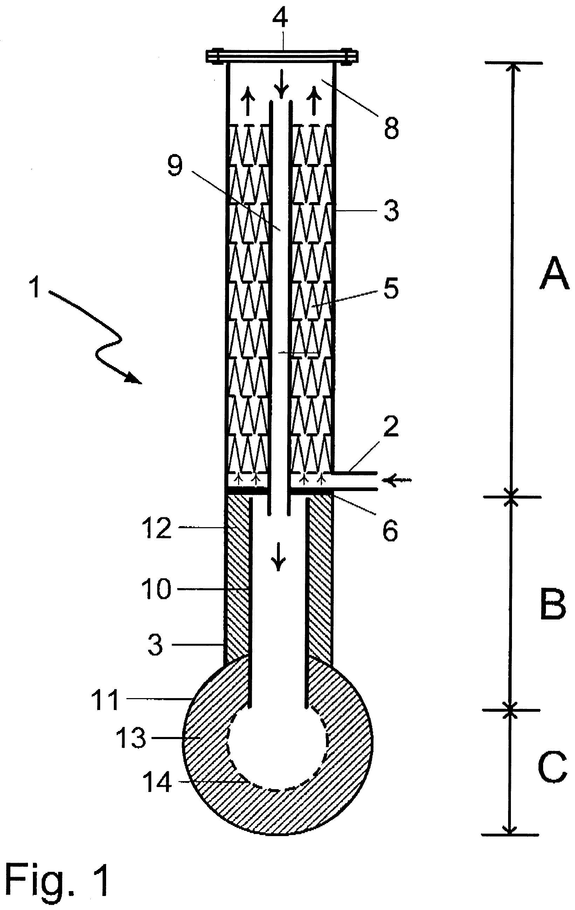

Das in Fig. 1 bildlich dargestellte Reformerrohr 1 ist in die Abschnitte A (Reaktionskammer), B (Austrittskammer) und C (Sammelleitung) unterteilt.

Über die Eintrittsleitung 2 tritt entschwefeltes Erdgas gemeinsam mit Reformierungsdampf in die im oberen Teil des Mantelrohrs 3 angeordnete Reaktionskammer A ein. Das Mantelrohr besteht aus einem Nickel-Chrom-Stahl, beispielsweise des Typs G-X45NiCrNbTi3525. Die Eintrittstemperatur des Einsatzgases beträgt 600 °C, die auf das Katalysatorvolumen bezogene Raumgeschwindigkeit beträgt typischerweise 4000 bis 5000 m_{N}³/(m³ h).

Im vorliegenden Ausführungsbeispiel ist das Reformerrohr senkrecht stehend mit dem offenen Rohrende des Mantelrohrs 3 in oberer Position angeordnet und wird von außen mittels Brennern beheizt (nicht dargestellt in Fig. 1). Das offene Rohrende des Mantelrohrs ist beim Betrieb des Reformerrohres mit einer Verschlussvorrichtung 4, beispielsweise einem aufgeflanschten Deckel, verschlossen, der für Revisionsvorgänge und zum Befüllen bzw. Entleeren des Katalysators geöffnet werden kann.

Das Erdgas und der Reformierungsdampf treten nach dem Eintritt in das Mantelrohr in den strukturierten Katalysator 5 ein, der aus einzelnen Packungssegmenten zusammengesetzt ist und hinsichtlich seines Aufbaus dem in der US 2012/0195801 A1 beschriebenen strukturierten Katalysator entspricht. Er ist mit einer nickelhaltigen Aktivschicht ausgestattet, die für die Dampfreformierung katalytisch aktiv ist. Der strukturierte Katalysator ist ferner so aufgebaut, dass ein signifikanter Anteil der Gasströmung radial abgelenkt wird. Hierdurch trifft ein Teil der Gasströmung auf die Innenwand des Reaktionsrohres, wodurch der radiale Wärmeübergang verbessert wird. Der Effekt ist allerdings begrenzt, so dass eine weitere Verbesserung des radialen Wärmeübergangs, wie sie mit dem Reformerrohr erzielt wird, von Vorteil ist.

Die Einsatzstoffe strömen sodann aufwärts durch den strukturierten Katalysator, wobei die endotherme Dampfreformierungsreaktion stattfindet. Das teilumgesetzte Erdgas, das neben Kohlenoxiden und Wasserstoff auch noch nicht umgesetztes Methan enthält, tritt nach Verlassen des strukturierten Katalysators in einen Freiraum 8 ein, der an dem verschlossenen Rohrende 4 des Mantelrohres angeordnet ist. Anschließend tritt der teilumgesetzte Einsatzgasstrom in das Eintrittsende des innerhalb der Katalysatorschüttung angeordneten, gerade verlaufenden Wärmetauscherrohrs 9 ein. Der durch das Wärmetauscherrohr 9 strömende Gasstrom gibt einen Teil seiner fühlbaren Wärme im Gegenstrom an die Katalysatorschüttung und den durch sie strömenden Einsatzgasstrom ab. Das Wärmetauscherrohr bestehen aus Werkstoffen mit guter Beständigkeit gegen die Metal Dusting-Korrosion wie z.B. Alloy 601, 602 CA, 617, 690, 692, 693, HR 160, HR 214, Kupfer enthaltende Legierungen oder sogenannte Mehrschichtmaterialien, bei denen die Rohre mit Zinn-Nickel- oder Aluminium-Nickel-Legierungen beschichtet sind. Alternativ oder zusätzlich sind die Austrittsenden der Wärmetauscherrohre auf ihren Innenseiten und an den durch den Trennboden durchgeführten Anteilen auch auf den Außenseiten mit einer Korrosionsschutzschicht ausgestattet. Im vorliegenden Beispiel ist dies eine Aluminium-Diffusionsschicht.

Eine mögliche Variante des oben erörterten Ausführungsbeispiels besteht darin, den Freiraum 8 im kalten Zustand weitgehend mit Katalysator, beispielsweise einer Schüttung eines herkömmlichen, als Formkörper erhältlichen Reformierungskatalysators, aufzufüllen. Im heißen Zustand während des Betriebs des Reformerrohrs bildet sich dann durch seine thermische Längenausdehnung bildet sich dann wiederum ein Freiraum, der die oben beschriebene Umlenkfunktion für die Gasströmung ausübt. Vorteilhaft ist es dabei, dass der Kontakt der Synthesegasprodukte enthaltenden Gasströmung mit Metalloberflächen und somit auch die Korrosionsneigung reduziert werden.

Nach Durchströmen des Wärmetauscherrohrs tritt der Synthesegasproduktstrom in die Austrittskammer B ein. Dazu wird das Austrittsende des Wärmetauscherrohrs 9 durch den Trennboden 6 durchgeführt und auf diese Weise fixiert. Es mündet dann austrittsseitig in das Innenrohr 10 ein, das die Verbindung zwischen den Wärmetauscherrohren 9 und der Sammelleitung 11 darstellt. Das Innenrohr ist ebenfalls aus einem der oben genannten, metallischen Werkstoffe gefertigt und seine Innenwand und bevorzugt auch seine Außenwand mit einer Aluminium-Diffusionsschicht als Korrosionsschutzschicht ausgestattet. Alternativ kann auch ein aus einem keramischen Werkstoff hergestelltes Innenrohr verwendet werden.

Das Innenrohr 10 ist mittels bildlich nicht dargestellter Befestigungen in seiner Position zwischen der Unterseite des Trennbodens 6 und der Sammelleitung 11 fixiert. Es besteht dabei keine feste, gasdichte Verbindung zwischen Innenrohr und der Unterseite des Trennbodens, sondern das Innenrohr ist zu letzterem beabstandet oder sitzt lediglich Stoß an Stoß auf der Unterseite des Trennbodens auf. Auf diese Weise kann ein Ausgleich bzw. eine Übertragung des statischen Drucks durch die gasdurchlässige thermische Isolierschicht 12 hindurch auf die Innenwand des Mantelrohrs 3 erfolgen. Der Kontakt der Innenwand des Mantelrohrs mit dem ruhenden oder nur schwach strömenden Synthesegasprodukt ist unkritisch, da sich deren Oberflächentemperatur aufgrund der Isolierung unterhalb des für die Metal-Dusting-Korrosion relevanten Temperaturbereichs befindet. Da das Innenrohr somit nicht drucktragend ist, kann dieses auch aus weniger druckresistenten Materialien, beispielsweise keramischen Werkstoffen hergestellt werden. Zwischen der Außenwand des Innenrohrs und der Innenwand des Mantelrohrs ist ein gasdurchlässiges Isoliermaterial 12 angebracht. Hierfür können faserbasierte Isoliermaterialien, aber auch in sich formstabile keramische Formkörper verwendet werden. Letztere sind besonders vorteilhaft, da sie besonders einfach montiert und demontiert werden können. Aufgrund ihrer Formstabilität können sie bei der Montage einfach in den Ringraum zwischen Mantelrohr und Innenrohr hineingestellt werden, ohne dass es besonderer Befestigungsmittel bedarf.

Auch austrittsseitig ist das Innenrohr 10 nicht fest bzw. nicht gasdicht mit der Sammelleitung 11 verbunden, sondern lediglich in letztere hineingeführt oder hineingesteckt. Neben den oben erörterten Vorteilen kann das Innenrohr auf diese Weise bei einer Anlagenrevision besonders leicht ausgetauscht werden. Ferner werden Druck- oder Zugspannungen vermieden, die beim Betrieb des Reformerrohrs aufgrund unterschiedlicher thermischer Ausdehnungskoeffizienten der für Mantelrohr und Innenrohr verwendeten Materialien auftreten können.

Die Sammelleitung 11 ist auf ihrer Innenseite mit Isoliermaterial 13 und/oder einer korrosionsresistenten, beispielsweise keramischen Beschichtung 14 versehen, die eine erhöhte Beständigkeit gegen die Metal Dusting-Korrosion aufweisen. Über die Sammelleitung wird der Synthesegasproduktstrom aus dem Reformerrohr 1 ausgeleitet und wird der weiteren Aufarbeitung zugeführt. Diese kann je nach Verwendungszweck des Synthesegasproduktes eine Kohlenmonoxid-Konvertierung, eine Gaswäsche zur Abtrennung von Kohlendioxid, eine Druckwechseladsorption zur Wasserstoffabtrennung sowie weitere Aufarbeitungsstufen umfassen.

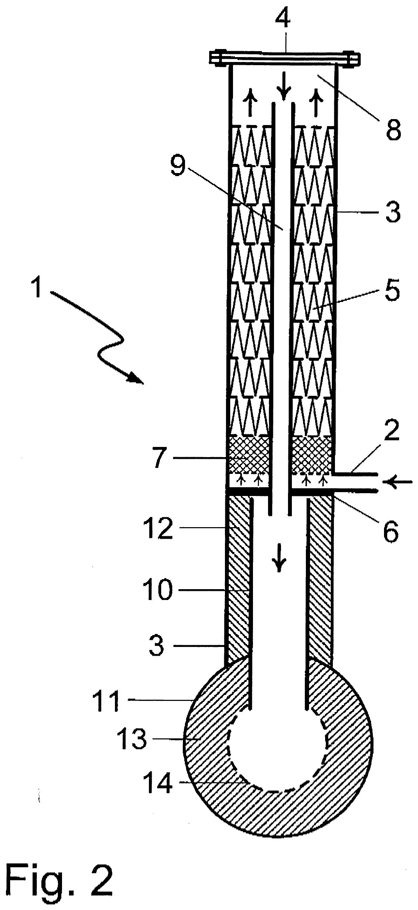

Die in der in Fig. 2 dargestellte, zweite Ausführungsform des Reformerrohrs entspricht in ihrem Aufbau und den durch die Bezugszeichen 1 bis 6 und 9 bis 14 gekennzeichneten Merkmalen der in Fig. 1 gezeigten und oben erörterten Ausgestaltung. Es tritt jedoch eine Katalysatorschüttung 7 hinzu, die in Strömungsrichtung dem strukturierten Katalysator vorgeschaltet ist. Diese besteht aus handelsüblichem Reformierungskatalysator auf Nickelbasis, die als Formkörper vorliegen. Der Freiraum in der Reaktionskammer zur Aufnahme der Katalysatorschüttung wird durch Weglassen des in Strömungsrichtung ersten Packungssegments gebildet. Zusätzlich wird an der Unterseite der Katalysatorschüttung ein Gitter oder Lochblech als Rückhaltevorrichtung vorgesehen. Es ist vorteilhaft, dass sich die Katalysatorschüttung nicht bis zum Trennboden 6 erstreckt, sondern dass unter ihr ein Freiraum verbleibt, der zur Verteilung des Einsatzgasgemisches über den Querschnitt des Reformerrohrs dient.

Die Verwendung der Katalysatorschüttung in einem Teilbereich der Reaktionskammer des Reformerrohrs erbringt die oben erörterten Kostenvorteile. Ferner ist es vorteilhaft, dass die dem strukturierten Katalysator vorgeschaltete Katalysatorschüttung gleichzeitig als Mischungszone für den Einsatzgasstroms wirkt. Dem nachfolgend stromabwärts angeordneten strukturierten Katalysator wird somit ein insbesondere in Radialrichtung besser durchmischtes Einsatzgasgemisch aufgegeben. Die Stütz- oder Tragevorrichtung des ersten der Katalysatorschüttung nachgeschalteten Packungssegments in Strömungsrichtung verhindert gleichzeitig die Fluidisierung der Katalysatorschüttung.

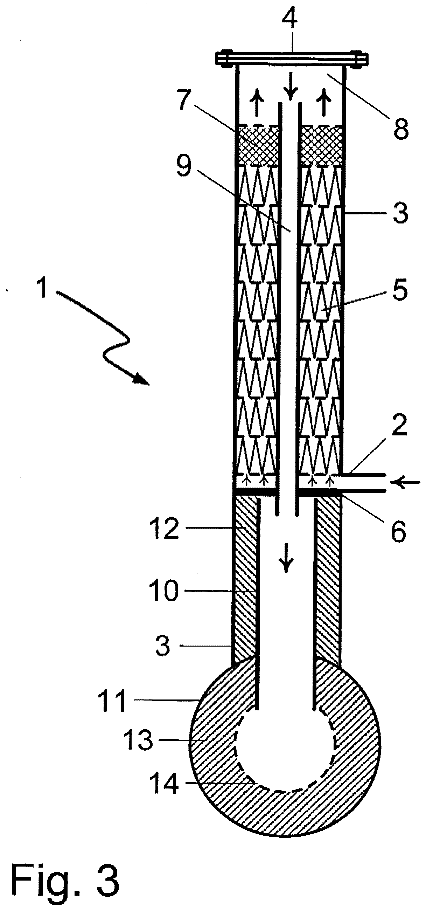

Die in der in Fig. 3 dargestellte, dritte Ausführungsform des Reformerrohrs entspricht in ihrem Aufbau und den durch die Bezugszeichen 1 bis 14 gekennzeichneten Merkmalen der in Fig. 2 gezeigten und oben erörterten zweiten Ausführungsform. Die Katalysatorschüttung 7 ist nun jedoch in Strömungsrichtung dem strukturierten Katalysator nachgeschaltet, die den Gesamtumsatz des Einsatzgasgemischs zu Synthesegasprodukten erhöht. Als Katalysator wird hierbei bevorzugt ein bei tieferen Temperaturen aktiver Katalysatortyp verwendet, der auf Nickel basiert und/oder Edelmetalle enthält. Die Gefahr der unerwünschten Fluidisierung des Schüttkatalysators ist bei dieser Anordnung geringer als der in Fig. 2 gezeigten Ausführungsform, da der Einsatzgasstrom bereits einen Teil seiner kinetischen Energie durch den Druckverlust über den strukturierten Katalysator verloren hat. Jedoch kann zur Sicherheit, wenn es die Druckverlustverhältnisse gestatten, der Katalysatorschüttung 7 austrittsseitig noch eine Rückhaltevorrichtung nachgeschaltet werden, wie es in Fig. 3 durch die gestrichelte Linie angedeutet ist.

Bei allen Ausführungsformen, bei denen neben strukturiertem Katalysator zusätzlich Abschnitte mit Katalysatorschüttungen vorliegen, ist darauf zu achten, dass sich im heißen Zustand während des Betriebs des Reformerrohrs kein Leerraum zwischen strukturiertem und unstrukturiertem Katalysatorbereich ergibt, da in dem Leerraum die Reformierungsreaktionen mangels Katalysator nicht ablaufen und sich bedingt durch den fehlenden Wärmeverbrauch eine Überhitzung ergäbe.

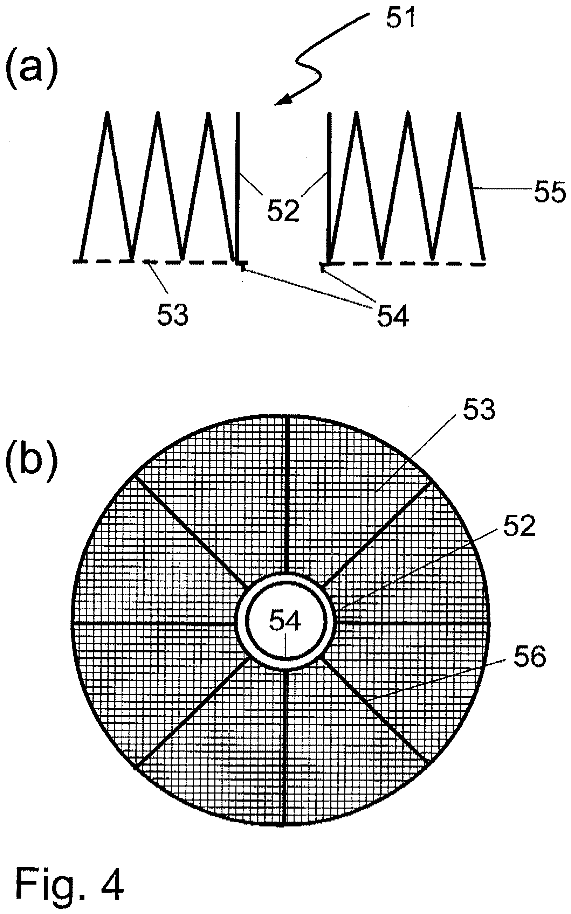

In Fig. 4 (a) ist der Aufbau eines Packungssegments 51 als Möglichkeit zur Ausgestaltung schematisch als Seitenansicht dargestellt. Im gezeigten Beispiel ist auch das Wärmetauscherrohr 9 aus einzelnen Rohrsegmenten 52 aufgebaut. An dem Rohrsegment 52 ist die Stütz- und Tragvorrichtung 53 z. B. mittels einer Schweissverbindung befestigt. Als Stütz- und Tragvorrichtung kann beispielsweise ein Lochblech verwendet werden. In Richtung auf das Zentrum des Packungssegments endet die Stütz- und Tragvorrichtung in einem Kragen 54, der als Befestigungselement für das sich unten anschließende Packungssegment dient. Auf der Stütz- und Tragvorrichtung liegt das Packungsmaterial 55 auf und umgibt das Rohrsegment 52 kreisringförmig.

Die Wärmetauscherrohrsegmente können zudem auch Funktionen bei der Montage des Reformerrohres übernehmen. So kann das Packungsmaterial 55 zunächst zur Zentrierung auf das Rohrsegment 52 aufgesetzt und dann an diesem fixiert werden. Anschließend wird das Packungssegment 51 in das Mantelrohr 3 eingeführt, das Packungsmaterial 55 radial gegen die Innenwand des Mantelrohres expandiert, so dass ein im Wesentlichen gasdichter Abschluss geschaffen werden, so dass Kurzschlussströmungen axial an der Innenwand des Mantelrohrs entlang und somit an der strukturierten Packung vorbei minimiert werden.

Fig. 4 (b) zeigt das in Fig. 4 (a) dargestellte Packungssegment 51 in der Draufsicht, wobei das Packungsmaterial 55 weggelassen wurde. Erkennbar sind nun die Stützstreben 56, die unter dem Tragboden 53 angeordnet sind und diese von unten abstützen. Sie sind an dem Rohrsegment 52 befestigt. Werden der Tragboden und die Stützstreben aus einem Metall oder einem anderen Material mit guter Wärmeleitfähigkeit gefertigt, wird zudem der radiale Wärmeübergang im Reformerrohr unterstützt.

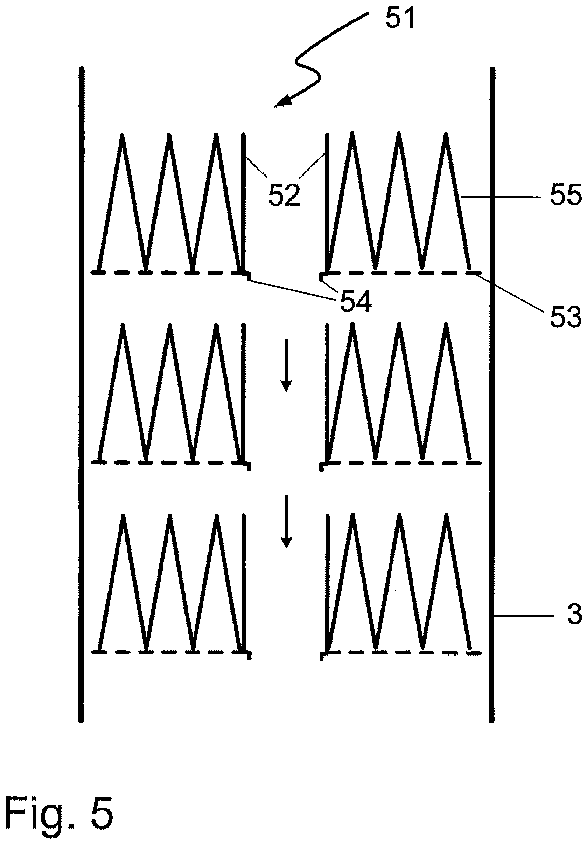

Fig. 5 zeigt den Aufbau des strukturierten Katalysators durch Aufeinanderstapeln einzelner Packungssegmente 51 in dem Mantelrohr 3. Die Kragen 54 greifen dabei jeweils in das darunter liegende Wärmetauscherrohrsegment 52 ein und fixieren es auf diese Weise. Nicht gezeigt ist ein die Anordnung nach oben abschließender, zusätzlicher Tragboden 53 und eine die Anordnung nach unten abschließendes Rohrstück, dass zur Fixierung des untersten Packungssegments dient und die gesamte Anordnung gegen den Trennboden 6 (vgl. Fig. 1 bis 3) abstützt.

Bei dem Aufbau des strukturierten Katalysators ist zu berücksichtigen, dass die Beweglichkeit der Struktur in axialer Richtung innerhalb des Mantelrohrs gegeben ist, um mechanische Spannungen durch die thermische Längenausdehnung des Reformerrohrs bei dessen Betrieb zu vermeiden. Andererseits müssen die einzelnen Wärmetauscherrohrsegmente 52 nach dem Zusammenbau druckdicht sein, wobei die Druckdichtigkeit sich auf den Druckverlust bezieht, den der Einsatzgasstrom beim Passieren des Reformerrohrs erleidet. Dies muss durch entsprechende konstruktive Maßnahmen gewährleistet werden, mit denen beispielsweise ein entsprechender Anpressdruck in senkrechter Richtung auf das aus Segmenten aufgebaute Wärmetauscherrohr ausgeübt wird.

### Bezugszeichenliste

- [1]: Reformerrohr
- [2]: Eintrittsleitung
- [3]: Mantelrohr
- [4]: Verschlussvorrichtung
- [5]: strukturierter Katalysator
- [6]: Trennboden
- [7]: Katalysatorschüttung
- [8]: Freiraum
- [9]: Wärmetauscherrohr
- [10]: Innenrohr
- [11]: Sammelleitung
- [12]: Isolierschicht
- [13]: Isolierschicht
- [14]: Beschichtung
- [51]: Packungssegment
- [52]: Wärmetauscherrohrsegment
- [53]: Tragboden
- [54]: Kragen
- [55]: Packungssegment
- [56]: Stützstrebe

- [A]: Reaktionskammer
- [B]: Austrittskammer
- [C]: Sammelleitung

## Patentansprüche

1. Reformerofen, umfassend feuerfest ausgekleidete oder feuerfest zugestellte Wände, eine Decke und einen Boden und einen dadurch gebildeten Innenraum, **dadurch gekennzeichnet, dass** eine Vielzahl von Reformerrohren (1) zur Umwandlung kohlenwasserstoffhaltiger Einsatzstoffe, vorzugsweise Erdgas, in ein Kohlenoxide und Wasserstoff enthaltendes Synthesegasprodukt unter Dampfreformierungsbedingungen und eine Vielzahl von Brennern zur Beheizung der Reformerrohre in dem Innenraum angeordnet sind, wobei die Reformerrohre jeweils umfassen:
(a) eine Reaktionskammer (A), umfassend ein äußeres, drucktragendes, von außen beheiztes Mantelrohr (3), wobei das Mantelrohr (3) an seinem einen Ende mittels eines Trennbodens (6) von einer benachbarten Austrittskammer (B) abgegrenzt und an seinem anderen Ende mit einer Verschlussvorrichtung (4) verschlossen ist,
(b) mindestens eine in der Reaktionskammer (A) angeordnete strukturierte Packung (5), enthaltend einen für die Dampfreformierung aktiven Katalysator,
(c) einen an der Reaktionskammer (A) angeordneten Eintritt (2) für den den Einsatzstoff enthaltenden Einsatzgasstrom, wobei der Eintritt (2) an dem dem Trennboden (6) zugewandten Ende der Reaktionskammer angeordnet ist und in Fluidverbindung mit dem Gaseintritt in die strukturierte Packung (5) steht,
(d) ein innerhalb der Reaktionskammer (A) und innerhalb der strukturierten Packung (5) angeordnetes Wärmetauscherrohr (9), dessen Eintrittsende in Fluidverbindung mit dem Gasaustritt aus der strukturierten Packung (5) steht und dessen Austrittsende in Fluidverbindung mit der Austrittskammer (B) steht, wobei der Einsatzgasstrom nach Eintritt in die Reaktionskammer (A) zunächst die strukturierte Packung (5) und nachfolgend im Gegenstrom das Wärmetauscherrohr (9) durchströmt und wobei das Wärmetauscherrohr (9) und der durch dieses strömende Synthesegasproduktstrom in einer Wärmeaustauschbeziehung mit der strukturierten Packung (5) und dem durch sie strömenden Einsatzgasstrom steht,
(e) eine Sammelleitung (C) für das Synthesegasprodukt, die mit der Austrittskammer (B) in Fluidverbindung steht, wobei
(f) das Austrittsende des Wärmetauscherrohrs (9) durch den Trennboden (6) durchgeführt wird, in die Austrittskammer (B) einmündet und in Fluidverbindung mit der Sammelleitung (C) steht, so dass das Synthesegasprodukt von der Reaktionskammer (A) über die Austrittskammer (B) in die Sammelleitung (C) gelangen kann, wobei
(g) das Mantelrohr (3) und das Wärmetauscherrohr (9) einen kreisförmigen Querschnitt und die strukturierte Packung (5) einen kreisringförmigen Querschnitt hat und
(h) das Mantelrohr (3), die strukturierte Packung (5) und das Wärmetauscherrohr (9) koaxial und konzentrisch angeordnet sind, wobei
(i) die strukturierte Packung (5) im Wesentlichen gasdicht abschließend zwischen der Innenwand des Mantelrohrs und der Außenwand des Wärmetauscherrohrs (9) angeordnet ist, wobei
(j) das Reformerrohr (1) stehend angeordnet ist, wobei die Reaktionskammer (A) im oberen Bereich und die Austrittskammer (B) im unteren Bereich angeordnet ist und die strukturierte Packung von unten nach oben von dem Einsatzgasstrom durchströmt wird, und
die Längsachsen der durch die Brenner erzeugten Flammen parallel zu den Längsachsen der Reformerrohre (1) ausgerichtet sind.

2. Reformerofen gemäß Anspruch 1, **dadurch gekennzeichnet, dass** bei der Vielzahl der Reformerrohre (1) sowohl die strukturierte Packung (5) als auch das Wärmetauscherrohr (9) aus einzelnen Modulen oder Segmenten bestehen, wobei jedes Wärmetauscherrohrsegment (52) mit einer Stütz- oder Tragevorrichtung für das zugehörige Packungssegment (51) ausgestattet ist.

3. Reformerofen gemäß eines der vorigen Ansprüche, **dadurch gekennzeichnet, dass** bei der Vielzahl der Reformerrohre (1) die Reaktionskammer (A) mindestens einen Bereich umfasst, der eine Schüttung (7) eines für die Dampfreformierung aktiven, körnigen, festen Katalysators enthält.

4. Reformerofen nach Anspruch 3, **dadurch gekennzeichnet, dass** bei der Vielzahl der Reformerrohre (1) der die Katalysatorschüttung (7) enthaltende Bereich dadurch gebildet wird, dass das entsprechende Packungssegment (51) weggelassen wird, das zugehörige Wärmetauscherrohrsegment (52) aber vorhanden ist.

5. Reformerofen gemäß eines der vorigen Ansprüche, **dadurch gekennzeichnet, dass** bei der Vielzahl der Reformerrohre (1) das Wärmetauscherrohr (9) mindestens teilweise mit einer Inertkörperschüttung gefüllt oder auf seiner Innenseite mit Leitblechen ausgestattet ist.

6. Reformerofen nach Anspruch 1, **dadurch gekennzeichnet, dass** der die Reaktionskammer (A) umfassende Teil der Vielzahl von Reformerrohren (1) mindestens teilweise im Innenraum angeordnet sind und der die Austrittskammer (B) umfassende Teil des Reformerrohrs (1) mindestens teilweise außerhalb des Innenraums angeordnet sind.

7. Reformerofen nach Anspruch 6, **dadurch gekennzeichnet, dass** auch die Eintritte für den den Einsatzstoff enthaltenden Einsatzgasstrom außerhalb des Innenraums angeordnet sind.

## Claims

1. A reformer furnace, comprising refractory-lined or refractory-set walls, a ceiling, and a floor, and an interior space formed thereby, **characterized in that** a plurality of reformer tubes (1) for converting hydrocarbon-containing feedstocks, preferably natural gas, into a synthesis gas product containing carbon oxides and hydrogen under steam reforming conditions, and a plurality of burners for heating the reformer tubes are arranged in the interior space, wherein the reformer tubes each comprise: (a) a reaction chamber (A), comprising an outer, pressure-bearing, externally heated shell tube (3), wherein the shell tube (3) is delimited at its one end by a partition plate (6) from an adjacent outlet chamber (B) and is closed at its other end with a closure device (4), (b) at least one structured packing (5) arranged in the reaction chamber (A), containing a catalyst active for steam reforming, (c) an inlet (2) arranged at the reaction chamber (A) for the feedstock-containing feed gas stream, wherein the inlet (2) is arranged at the end of the reaction chamber facing the partition plate (6) and is in fluid communication with the gas inlet into the structured packing (5), (d) a heat exchanger tube (9) arranged within the reaction chamber (A) and within the structured packing (5), the inlet end of which is in fluid communication with the gas outlet from the structured packing (5) and the outlet end of which is in fluid communication with the outlet chamber (B), wherein the feed gas stream, after entering the reaction chamber (A), first flows through the structured packing (5) and subsequently in countercurrent through the heat exchanger tube (9), and wherein the heat exchanger tube (9) and the synthesis gas product stream flowing through it are in a heat exchange relationship with the structured packing (5) and the feed gas stream flowing through it, (e) a collecting line (C) for the synthesis gas product, which is in fluid communication with the outlet chamber (B), wherein (f) the outlet end of the heat exchanger tube (9) is passed through the partition plate (6), opens into the outlet chamber (B), and is in fluid communication with the collecting line (C), such that the synthesis gas product can pass from the reaction chamber (A) via the outlet chamber (B) into the collecting line (C), wherein (g) the shell tube (3) and the heat exchanger tube (9) have a circular cross-section and the structured packing (5) has an annular cross-section, and (h) the shell tube (3), the structured packing (5), and the heat exchanger tube (9) are arranged coaxially and concentrically, wherein (i) the structured packing (5) is arranged essentially gastight, sealingly between the inner wall of the shell tube and the outer wall of the heat exchanger tube (9), wherein (j) the reformer tube (1) is arranged vertically, wherein the reaction chamber (A) is arranged in the upper region and the outlet chamber (B) is arranged in the lower region, and the structured packing is flowed through from bottom to top by the feed gas stream, and the longitudinal axes of the flames produced by the burners are aligned parallel to the longitudinal axes of the reformer tubes (1).

2. The reformer furnace according to claim 1, **characterized in that**, in the plurality of reformer tubes (1), both the structured packing (5) and the heat exchanger tube (9) consist of individual modules or segments, wherein each heat exchanger tube segment (52) is equipped with a support or carrying device for the associated packing segment (51).

3. The reformer furnace according to one of the preceding claims, **characterized in that**, in the plurality of reformer tubes (1), the reaction chamber (A) comprises at least one region that contains a packed bed (7) of a granular, solid catalyst active for steam reforming.

4. The reformer furnace according to claim 3, **characterized in that**, in the plurality of reformer tubes (1), the region containing the catalyst bed (7) is formed by omitting the corresponding packing segment (51), while the associated heat exchanger tube segment (52) is present.

5. The reformer furnace according to one of the preceding claims, **characterized in that**, in the plurality of reformer tubes (1), the heat exchanger tube (9) is at least partially filled with a packing of inert bodies or is equipped on its inner side with guide plates.

6. The reformer furnace according to claim 1, **characterized in that** the part of the plurality of reformer tubes (1) comprising the reaction chamber (A) is arranged at least partially inside the interior space, and the part of the reformer tube (1) comprising the outlet chamber (B) is arranged at least partially outside the interior space.

7. The reformer furnace according to claim 6, **characterized in that** the inlets for the feedstock-containing feed gas stream are also arranged outside the interior space.

## Revendications

1. Four de reformage, comprenant des parois, un plafond et un sol garnis ou constitués de manière réfractaire et un espace intérieur ainsi formé, **caractérisé en ce qu'**une pluralité de tubes de reformage (1) pour la conversion de charges d'alimentation contenant des hydrocarbures, de préférence du gaz naturel, en un produit de gaz de synthèse contenant des oxydes de carbone et de l'hydrogène dans des conditions de reformage à la vapeur, et une pluralité de brûleurs pour le chauffage des tubes de reformage sont disposés dans l'espace intérieur, les tubes de reformage comprenant chacun : (a) une chambre de réaction (A), comprenant un tube-enveloppe extérieur (3) résistant à la pression et chauffé de l'extérieur, le tube-enveloppe (3) étant délimité à l'une de ses extrémités par une plaque de séparation (6) d'une chambre de sortie adjacente (B) et étant fermé à son autre extrémité par un dispositif de fermeture (4), (b) au moins un garnissage structuré (5) disposé dans la chambre de réaction (A), contenant un catalyseur actif pour le reformage à la vapeur, (c) une entrée (2) disposée au niveau de la chambre de réaction (A) pour le courant de gaz d'alimentation contenant la charge, l'entrée (2) étant disposée à l'extrémité de la chambre de réaction tournée vers la plaque de séparation (6) et étant en communication fluidique avec l'entrée de gaz dans le garnissage structuré (5), (d) un tube d'échangeur de chaleur (9) disposé à l'intérieur de la chambre de réaction (A) et à l'intérieur du garnissage structuré (5), dont l'extrémité d'entrée est en communication fluidique avec la sortie de gaz du garnissage structuré (5) et dont l'extrémité de sortie est en communication fluidique avec la chambre de sortie (B), le courant de gaz d'alimentation, après son entrée dans la chambre de réaction (A), traversant d'abord le garnissage structuré (5) puis, à contre-courant, le tube d'échangeur de chaleur (9), et le tube d'échangeur de chaleur (9) et le courant de produit de gaz de synthèse qui le traverse étant en relation d'échange de chaleur avec le garnissage structuré (5) et le courant de gaz d'alimentation qui le traverse, (e) une conduite collectrice (C) pour le produit de gaz de synthèse, qui est en communication fluidique avec la chambre de sortie (B), où (f) l'extrémité de sortie du tube d'échangeur de chaleur (9) est passée à travers la plaque de séparation (6), débouche dans la chambre de sortie (B) et est en communication fluidique avec la conduite collectrice (C), de sorte que le produit de gaz de synthèse peut passer de la chambre de réaction (A) à la conduite collectrice (C) via la chambre de sortie (B), où (g) le tube-enveloppe (3) et le tube d'échangeur de chaleur (9) ont une section transversale circulaire et le garnissage structuré (5) a une section transversale annulaire, et (h) le tube-enveloppe (3), le garnissage structuré (5) et le tube d'échangeur de chaleur (9) sont disposés de manière coaxiale et concentrique, où (i) le garnissage structuré (5) est disposé de manière essentiellement étanche aux gaz, en scellant l'espace entre la paroi intérieure du tube-enveloppe et la paroi extérieure du tube d'échangeur de chaleur (9), où (j) le tube de reformage (1) est disposé verticalement, la chambre de réaction (A) étant disposée dans la zone supérieure et la chambre de sortie (B) dans la zone inférieure, et le garnissage structuré étant traversé de bas en haut par le courant de gaz d'alimentation, et les axes longitudinaux des flammes produites par les brûleurs sont alignés parallèlement aux axes longitudinaux des tubes de reformage (1).

2. Four de reformage selon la revendication 1, **caractérisé en ce que**, dans la pluralité de tubes de reformage (1), tant le garnissage structuré (5) que le tube d'échangeur de chaleur (9) sont constitués de modules ou de segments individuels, chaque segment de tube d'échangeur de chaleur (52) étant équipé d'un dispositif de support ou de soutien pour le segment de garnissage (51) correspondant.

3. Four de reformage selon l'une des revendications précédentes, **caractérisé en ce que**, dans la pluralité de tubes de reformage (1), la chambre de réaction (A) comprend au moins une zone qui contient un lit catalytique (7) d'un catalyseur solide, granulaire, actif pour le reformage à la vapeur.

4. Four de reformage selon la revendication 3, **caractérisé en ce que**, dans la pluralité de tubes de reformage (1), la zone contenant le lit catalytique (7) est formée en omettant le segment de garnissage (51) correspondant, mais le segment de tube d'échangeur de chaleur (52) associé est présent.

5. Four de reformage selon l'une des revendications précédentes, **caractérisé en ce que**, dans la pluralité de tubes de reformage (1), le tube d'échangeur de chaleur (9) est au moins partiellement rempli d'un garnissage de corps inertes ou est équipé sur sa face intérieure de plaques de guidage.

6. Four de reformage selon la revendication 1, **caractérisé en ce que** la partie de la pluralité de tubes de reformage (1) comprenant la chambre de réaction (A) est disposée au moins partiellement à l'intérieur de l'espace intérieur, et la partie du tube de reformage (1) comprenant la chambre de sortie (B) est disposée au moins partiellement à l'extérieur de l'espace intérieur.

7. Four de reformage selon la revendication 6, **caractérisé en ce que** les entrées pour le courant de gaz d'alimentation contenant la charge sont également disposées à l'extérieur de l'espace intérieur.
